# EUROPÄISCHE PATENTSCHRIFT

(11) **EP 2 116 321 B1**
(45) Veröffentlichungstag und Bekanntmachung des Hinweises auf die Patenterteilung: **08.01.2014**
(21) Anmeldenummer: 09006354.6
(22) Anmeldetag: 11.05.2009
(51) Int. Cl.: B23B 51/02, B28D 1/14

(54) **Bohrwerkzeug, insbesondere Spiralbohrer**
Boring tool, in particular twist drill
Outil de forage, notamment foret hélicoïdal

(30) Priorität: 09.05.2008 DE 102008022945; 20.02.2009 EP 09002447
(43) Veröffentlichungstag der Anmeldung: 11.11.2009
(73) Patentinhaber: Irwin Industrial Tool Company, Huntersville, NC 28078 (US)
(72) Erfinder: Pedersen, Hans, 7760 Hurup (DK); Geier, Manfred, 82178 Puchheim (DE)
(74) Vertreter: Schmid, Nils T.F.

(56) Entgegenhaltungen:
- EP-A- 0 653 544
- FR-A- 1 274 316
- GB-A- 190 625 179
- US-A- 513 320

## Beschreibung

Die Erfindung betrifft ein Bohrwerkzeug, insbesondere einen Spiralbohrer, insbesondere zum Bohren von Gestein gemäß Oberbegriff des Anspruchs 1, ein solches Bohrwerkzeug ist aus der EP-A-0653544 bekannt. Ein derartiges Bohrwerkzeug ist üblicherweise schaftförmig, wobei die Außenseite eines Ausgangsschafts zumeist gleichmäßig zylindrisch ist. Ein Befestigungsende des Bohrwerkzeugs kann auch kegelförmig sein, um eine besonders genaue axiale Position des Bohrwerkzeugs relativ zum Bohrantrieb festzulegen.

Das Bohrwerkzeug ist üblicherweise mit einem Spanende oder Bohrkopf versehen, der unter Umständen durch eine Hartmetallplatte verstärkt ist, die in einem Schlitz am Spanende des Bohrwerkzeugs eingesetzt und befestigt ist. Der Bohrkopf oder das Spanende kennzeichnen sich durch einen Hauptschneidewinkel, der bei üblicherweise zwischen 100° und 150° liegt.

Beim Ansetzen des Bohrwerkzeugs greift zunächst das Spanende in das Werkstück ein, undbeim fortgesetzten Bohren kommt auch ein zwischen dem Befestigungsende und dem Spanende liegendes Schneidteil mit dem Werkstück in Eingriff, wodurch ein zylindrisches Loch in dem Werkstück ausgeräumt wird.

Das den überwiegenden Teil des Bohrwerkzeugs bildende Schneidteil hat üblicherweise zwei sich längs des Schneidteils erstreckende Hauptwendelnute, über die bekanntermaßen Bohrmehl von dem Spanende weg abtransportiert werden soll. Des Weiteren bildet das bekannte Schneidteil eine sich längs des Schneidteils erstreckende, von den beiden Hauptwendelnuten begrenzte, teilzylindrische oder teilkegelförmige Wendelstegaußenfläche, die sich üblicherweise mit gleicher Steigung parallel und zwischen zwei Hauptwendelnute erstreckt. Von der teilzylindrischen Wendelstegaußenfläche ist das Schneidteil am Übergang zu der jeweiligen Hauptwendelnut mit einem stufenförmigen Profilsprung geformt, durch den eine sich wendelförmig erstreckende Kante oder Schneidkante gebildet ist. Den Querschnitt des Bohrers betrachtend verläuft die Wendelstegaußenfläche längs des konstanten Außendurchmessers des zylindrischen Schaftgrundkörpers des Bohrwerkzeugs. Um die Bohreffektivität des Bohrwerkzeugs zu erhöhen, sind unterschiedlichste Bohrwerkzeugtypen bekannt. Beispielsweise ist aus DE 20 2005 016 682 U1 ein Bohrwerkzeug bekannt, dessen Hauptwendelnut an deren dem Bohrkopf zugewandten Nutflanke gestuft ist. Die einzelnen Stufen verlaufen mit gleicher Steigung innerhalb der Hauptwendelnut.

EP 0 685 629 B1 offenbart einen Gesteinsbohrer, bei dem zwei zueinander parallele Abfuhrnuten in dem Bohrschaft eingearbeitet sind. Auf diese Weise sollen zwei parallel verlaufende Abfuhmuten mit unterschiedlichen Nutquerschnitten bereitgestellt sein.

Aus DE 297 23 908 U1 ist ein Gesteinsbohrer mit einer in mehrere parallel verlaufende, separate Bohrnutabschnitte unterteilten Hauptwendelnut bekannt, wobei die Bohrnutabschnitte entweder durch ringförmige Erhebungen oder entsprechende Vertiefungen jeweils gleicher Steigung separiert sind. Auch DE 103 42 817 A1 offenbart einen Bohrer mit einer Hauptwendelnut, in der mehrere wendelförmige, parallel zur Hauptwendelnut verlaufende Ringvorsprünge eingearbeitet sind, durch die mehrere Bohrnutabschnitte parallelen Verlaufs gebildet sind.

Aus US 513,320 ist ein Kohlebohrer bekannt, bei dem in die Stegaußenflächen, die die Hauptwendelnuten trennen, ein Gewinde eingeschnitten ist. Dieses Gewinde soll sich in die Kohle schneiden und die Rotationsbewegungen des Bohrwerkzeugs in eine Vorschubbewegung umsetzen.

Gemäß GB 25,179 können die Funktionen eines Bohrers und einer Reibahle kombiniert werden, indem in den Wendelstegaußenflächen in Umfangsrichtung des Bohrwerkzeugs wirkende Schneiden ausgeformt werden.

Aus FR 1 274 316 ist ein Bohrwerkzeug bekannt, bei dem in den Wendelstegaußenflächen Rillen vorgesehen sind, deren Steigungsrichtung entgegen der Steigungsrichtung der Hauptwendelnut läuft, so dass ein Schmiermittel durch die Drehung des Bohrers in das Bohrloch und bis zur Bohrspitze vordringen kann.

EP 0 653 544 offenbart einen Gesteinsbohrer, bei dem in den Wendelstegaußenflächen im rechten Winkel zum Bohrerschaft angeordnete parallele Rillen vorgesehen sind. Das Einformen von Rillen verringert die an der Bohrlochwand anliegende Wendelstegaußenfläche, wodurch die Reibung des Bohrerschafts im Bohrloch reduziert ist.

Sämtliche der bekannten, oben genannten Bohrwerkzeugausführungen leiden an dem Nachteil, dass durch die zusätzliche Profilierung zur Bildung größerer oder separater, wendelförmiger Bohrnute die Festigkeit des Bohrwerkzeugs nicht unerheblich beeinträchtigt ist. Durch die zusätzlichen Wendelnutabschnitte bilden sich Spannungsspitzen an dem durch die Wendelnutabschnitte und der damit einhergehenden Materialschwächung geprägten Schneidteil des Bohrwerkzeugs, welche Spannungsspitzen zu einem frühzeitigen Versagen des Bohrwerkzeugs führen können.

Es ist Aufgabe der Erfindung, die Nachteile des Stands der Technik zu überwinden, insbesondere ein Bohrwerkzeug der gattungsgemäßen Art derart weiterzubilden, dass die Bohreffektivität erhöht wird, ohne die Ermüdungsbeständigkeit des Bohrwerkzeugs zu beeinträchtigen.

Diese Aufgabe wird durch die Merkmale von Patentanspruch 1 gelöst.

Erfindungsgemäß sind in der teilzylindrischen Wendelstegaußenfläche insbesondere auf einer oder mehreren gedachten Wendelbahnen um das Schneidteil des Bohrwerkzeugs mehrere Rillenabschnitte eingearbeitet, die sich quer oder zu einem nicht vernachlässigbaren Winkel insbesondere von 20° bis 90° zu einer Steigungsrichtung der Hauptwendelnut erstrecken. Vorzugsweise verlaufen die einzelnen Rillenabschnitte an der Wendelstegaußenfläche geradlinig und haben insbesondere eine konstante Rillenradialtiefe und/oder Rillenbreite und/oder Rillenlänge. Die mehreren Rillenabschnitte können auf einer geschlossenen Ringbahn konzentrisch zur Längsachse des Bohrwerkzeugs liegen. Eine Anordnung der mehreren Rillenabschnitte längs einer oder mehrerer gedachter Wendelbahnen hat sich insbesondere im Vergleich zur Anordnung der mehreren Rillenabschnitte auf einer geschlossenen Ringbahn als vorteilhafter erwiesen, als die Dauerfestigkeit bei der wendelbahnartigen Anordnung höher ist. Es zeigte sich, dass bei der Anordnung der Rillenabschnitte auf einer geschlossenen Ringbahn die im Betrieb induzierten Spannungsspitzen in dem die mehreren Rillenabschnitte begrenzenden Material höher sind als bei der wendelbahnartigen Anordnung der mehreren Rillenabschnitte. Versuche zeigten, dass mit der erfindungsgemäßen Maßnahme die Bohreffektivität deutlich erhöht werden kann. Die quer zur Hauptwendelnut liegenden mehreren Rillenabschnitte in der Wendelstegaußenfläche bewirken eine deutliche Reduzierung der Reibung zwischen dem Werkstück und dem Bohrwerkzeug, wodurch zum einen weniger Antriebsenergie in das Bohrwerkzeug eingeleitet werden muss zum anderen überraschenderweise das Bohrwerkzeug weit weniger thermisch belastet wird. Es zeigte sich auch, dass durch die erfindungsgemäßen Rillenabschnitte in der Wendelstegaußenfläche, wo das Bohrwerkzeug abschnittsweise am stärksten ausgebildet ist, eine Beeinträchtigung der Dauerfestigkeit des Bohrwerkzeugs nicht bemerkbar ist.

Bei einer bevorzugten Ausführung der Erfindung erstrecken sich die mehreren Rillenabschnitte mit einer wesentlich größeren Umfangsrichtungskomponente als Axialrichtungskomponente. Es sei klar, dass sich die Ringabschnitte auch ausschließlich in Axialrichtung erstrecken können. Es zeigte sich allerdings, dass eine dominierende Umfangsrichtungskomponente hinsichtlich der Bohreffektivität vorteilhafter ist.

Bei einer bevorzugten Ausführung der Erfindung sind die mehreren Rillenabschnitte parallel zueinander angeordnet. Aufgrund der parallelen Anordnung und dem damit notwendigerweise einhergehenden Abstand der mehreren Rillenabschnitte zueinander ist es möglich, den Bohrmehl-Abtransporteffekt der mehreren Rillen zu steigern, ohne das Bohrwerkzeug zu stark zu schwächen.

Außerdem können bei einer Weiterbildung der Erfindung die mehreren Rillenabschnitte unter Ausbildung eines teilzylindrischen und/oder teilkegelförmigen Wendelstegaußenflächenabschnitts axial zueinander versetzt sein. Dies bedeutet, dass die in Axialrichtung benachbarten Rillenabschnitte nicht unmittelbar nebeneinander liegen, sondern zwischen sich einen teilzylindrischen oder teilkegelförmigen Flächenabschnitt der Bohreraußenfläche begrenzen. Dieser Flächenabschnitt verläuft ebenfalls wendelbahnförmig an der Außenseite des Bohrwerkzeugs und ist durch die Hauptwendelnut unterbrochen. Vorzugsweise ist die im Wesentlichen axiale, insbesondere konstante Breite des Flächenabschnitts zwischen zwei benachbarten Rillenabschnitten größer als 1mm, 2mm, 3mm, 4mm oder 5mm. Die Ausbildung eines Flächenabschnitts zwischen den mehreren Rillenabschnitten hat den Vorteil, dass Bohrmehl sicher innerhalb der Rille transportiert werden kann und ein Luft- und Wärmeaustausch zwischen den benachbarten Rillenabschnitten beschränkt ist.

Vorzugsweise erstrecken sich die mehreren Rillenabschnitte jeweils von einem dem Spanende zugewandten Rand der Hauptwendelnut zu einem dem Befestigungsende zugewandten Rand der Hauptwendelnut, insbesondere linear umfänglich. Vorzugsweise erstrecken sie sich von einem zum anderen Rand auf dem kürzesten Weg längs der Wendelstegaußenfläche.

Gemäß der Erfindung liegen die mehreren Rillenabschnitte auf wenigstens einer gedachten gemeinsamen Nebenwendelbahn, deren Steigung kleiner als die Hauptwendelnutsteigung ist. Die Wendelsteigung definiert sich durch eine axiale Breite (in mm) eines vollumfänglichen 360°-Umlauf der Wendel. Vorzugsweise ist die Steigung der wenigstens einen Nebenwendelbahn derart kleiner als die Hauptwendelnutsteigung, dass der wendelförmige Verlauf der Nebenwendelbahn bei einem Umlauf wenigstens einmal, vorzugsweise mehrere Male, insbesondere mehr als fünf oder zehn Mal, durch die Hauptwendelnut unterbrochen ist. Bei der Anordnung der mehreren Rillenabschnitte auf einer einzigen, sich längs des Bohrwerkzeugs erstreckenden Wendelbahn unterschiedlicher Steigung zur Hauptwendelnutsteigung wurden optimale Dauerfestigkeitsergebnisse erzielt, wobei die Bohreffektivität aufgrund eines verbesserten Bohrmehlabtransports sowie einer Verringerung der thermischen Belastung des Bohrwerkzeugs erhöht werden kann.

Bei einer bevorzugten Ausführung der Erfindung ist die Hauptwendelbahnsteigung um wenigstens das Zweifache, insbesondere Fünffache, vorzugsweise Zehnfache, insbesondere Zwölf- oder Fünfzehnfache größer als die Wendelsteigung der gedachten Nebenwendelbahn, auf der die mehreren ausschließlich in der Wendelstegaußenfläche eingebrachten Rillenabschnitte positioniert sind.

Vorzugsweise bleiben die Wendelsteigung der gedachten Nebenwendelbahn und/oder die Wendelsteigung der Hauptwendelnut längs der gesamten Axialerstreckung des Schneidteils konstant. Auf diese Weise kann ein im Wesentlichen kontinuierlicher und verstopfungsfreier Abtransport von Bohrmehl längs der Hauptwendelnut und der mehreren Rillenabschnitte erreicht werden.

Bei einer bevorzugten Ausführung der Erfindung ist bei einem Durchmesser des zylindrischen Schaftgrundkörpers des Bohrwerkzeugs, insbesondere der teilzylindrischen Wendelstegaußenfläche, von 5mm, 6mm, 6,5mm, 7mm, 8mm, 9mm oder 10mm eine Wendelsteigung der gedachten Nebenwendelbahn in einem Bereich von 0,5mm bis 3mm, vorzugsweise von 1mm bis 2,5mm, vorzugsweise von 1,5mm bis 2,5mm, ausgewählt. Dabei kann insbesondere die Wendelsteigung der Hauptwendelnut in einem Bereich von 15mm bis 40mm, vorzugsweise 22mm bis 30mm, bestimmt sein.

Bei einer Weiterbildung der Erfindung ist eine Breite der mehreren Rillenabschnitte und/oder eine Radialtiefe der mehreren Rillenabschnitte kleiner als eine Nutbreite der Hauptwendelnut bzw. einer Radialtiefe der Hauptwendelnut. Die Nutbreite definiert sich aus dem kürzesten Abstand zweier sich gegenüber liegender Ränder der Hauptwendelnut auf radialem Niveau der zylindrischen Außenstegfläche zwischen zwei Hauptwendelnuten. Die Radialtiefe der Hauptwendelnut definiert sich durch den Radialabstand deren radialen Tiefpunkts zur teilzylindrischen Außenstegfläche zwischen zwei benachbarten Hauptwendelnuten.

Vorzugsweise ist eine Radialtiefe der mehreren Rillenabschnitte kleiner als 1mm, vorzugsweise kleiner als 0,5mm, insbesondere gleich 0,1mm. Eine Breite der mehreren Rillenabschnitte kann kleiner als 1mm, insbesondere gleich etwa 0,5mm, 0,6mm oder 0,7mm, sein.

Im Hinblick auf den wenigstens einen gemäß einer Weiterbildung der Erfindung zu erzeugenden Flächenabschnitt zwischen zweier benachbarter Rillenabschnitte kann vorzugsweise die Nebenwendelbahnsteigung größer, insbesondere deutlich größer, als die Breite der Rillenabschnitte sein, die insbesondere im Verlauf der Rillenabschnitte konstant sind. Vorzugsweise soll die Nebenwendelbahnsteigung der Rillenabschnitt doppelt so groß wie die konstante Breite der Rillenabschnitte sein. Beispielsweise sollte die Nebenwendelbahnsteigung mindestens um 0,2 oder 0,3mm größer als die Breite der mehreren Rillenabschnitte sein. Bei einer bevorzugten Ausführung der Erfindung ist die Nebenwendelbahnsteigung um etwa 0,5mm, 1mm, 2mm oder mehr größer als die Breite der mehreren Rillenabschnitte, damit sich von den zwei benachbarten Rillenabschnitten ein teilzylindrischer oder flächenkegelförmiger Flächenabschnitt in einer Breite von bis zu 2mm oder mehr ergibt.

Bei einer bevorzugten Ausführung der Erfindung liegen die mehreren Rillenabschnitte unterbrochen von der wenigstens einen Hauptwendelnut auf einer gedachten (ununterbrochenen) Nebenwendelbahn. Die die mehreren Rillenabschnitte belegende Nebenwendelbahn windet sich insbesondere im Wesentlichen über die gesamte axiale Länge des Schneidteils.

Vorzugsweise mündet die die mehreren Rillenabschnitte belegende Nebenwendelbahn im Wesentlichen in das Bohrende, wobei entweder einer der Rillenabschnitte an dem Bohrende mündet oder zumindest in einem sehr nahen Abstand am Bohrende endet.

Bei einer Weiterbildung der Erfindung mündet jeder Rillenabschnitt von einem Hauptwendelnutrand in den dazu benachbarten, gegenüberliegenden Hauptwendelnutrand.

Erfindungsgemäß ist die Wendelsteigungsrichtung der gedachten Nebenwendelbahn zur Wendelsteigungsrichtung der Hauptwendelnut gleichgerichtet.

Weitere Eigenschaften, Merkmale und Vorteile der Erfindung werden durch die folgende Beschreibung einer bevorzugten Ausführung der Erfindung anhand der beiliegenden Zeichnungen deutlich, in denen zeigen:
- Figur 1: eine Seitenansicht des erfindungsgemäßen Bohrwerkzeugs; und
- Figur 2: eine Querschnittsansicht des Bohrwerkzeugs nach Figur 1 entlang der Schnittlinie II-II.

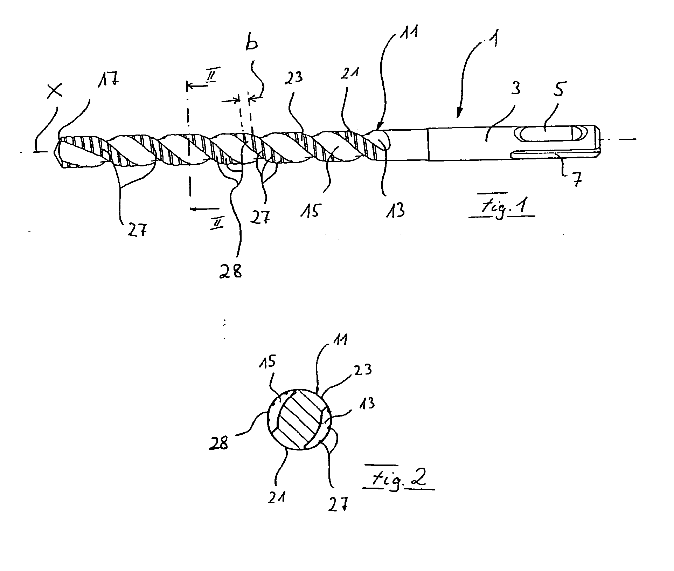

In den Figuren 1 und 2 ist der erfindungsgemäße Spiralbohrer im Allgemeinen mit der Bezugsziffer 1 versehen. Der Spiralbohrer 1 hat eine im Wesentlichen zylindrische Schaftgrundform.

Der Spiralbohrer 1 bildet ein Befestigungsende 3, das zylindrisch ausgeführt ist und endseitig Aussparungen 5, 7 aufweist, um eine definierte Position hinsichtlich des Bohrwerkzeugantriebs (nicht dargestellt) sicherzustellen. Das zylindrische Befestigungsende 3 erstreckt sich über im Wesentlichen ein Viertel bis ein Drittel der Gesamtlänge des Spiralbohrers 1.

An dem Befestigungsende 3 schließt in Axialrichtung X das Schneidteil 11 an, dessen maximaler zylindrischer Außendurchmesser geringfügig kleiner als der des Befestigungsendes 3 ist.

In dem am Anfang des Fertigungsprozesses des Spiralbohrers idealzylindrischen Grundkörper des Schneidteils 11 sind zwei parallel verlaufende, spiralförmige Hauptwendelnute 13, 15 eingearbeitet, die sich bei konstanter Steigung längs des Schneidteils 11 hin zu einem Bohrkopf oder Spanende 17 des Spiralbohrers 1 erstrecken, der wenigstens zwei Hauptschneiden definiert.

Zwischen den Hauptwendelnuten 13, 15 verbleiben zwei voneinander durch eine Hauptwendelnut 13, 15 voneinander beabstandete und dazu parallel verlaufende, teilzylindrische Wendelstegaußenflächen 21, 23 des zylindrischen Grundkörpers des Schneidteils bei gleicher Steigung wie die beiden Hauptwendelnute 13, 15. Die Breite (kürzester Abstand von zwei sich gegenüberliegenden Begrenzungsrändern einer Wendelstegaußenfläche 21, 23) einer jeden Wendelstegaußenfläche 21, 23 entspricht im Wesentlichen der Breite (kürzester Abstand der sich gegenüberliegenden, die Hauptwendelnut 13, 15 begrenzenden Rändern) der Hauptwendelnut 13, 15. Die Wendelsteigung (axiale Weite bei einem voll umfänglichen 360°-Umlauf der Wendel) der Wendelstegaußenflächen 21, 23 und der Hauptwendelnuten 13, 15 liegt etwa bei 20 bis 30mm.

In beiden teilzylindrischen Wendelstegaußenflächen 21, 23 ist eine unterbrochene Nebenwendelbahn erkennbar, die durch mehrere, gleich lange Rillenabschnitte 27 gebildet ist. Die Rillenabschnitte 27 belegen die Nebenwendelbahn konstanter Steigung, und bezüglich des Umlaufs der Nebenwendelbahn sind die mehreren Rillenabschnitte 27 fluchtend zueinander angedeutet. Die Wendelsteigung der mehreren Rillenabschnitte 27 ist deutlich kleiner als die der Hauptwendelnute 13, 15 bzw. der Wendelstegaußenflächen 21, 23.

Die konstante Wendelsteigung der unterbrochenen Nebenwendelbahn beträgt bei einem 360°-Umlauf etwa 1,5 bis 2mm. Jeder Rillenabschnitt 27 der Nebenwendelbahn hat eine radiale Tiefe von etwa 0,1mm und eine Breite von etwa 0,5 bis 0,7mm.

Die einzelnen Rillenabschnitte 27 liegen parallel zueinander und haben eine deutlich größere Umfangsrichtungskomponente als Axialrichtungskomponente. Die Umfangsrichtungskomponente ist geringfügig kleiner als ein zur Axialrichtung X liegender rechter Winkel.

Wie in den Figuren 1 und 2 ersichtlich ist, wird zwischen zwei benachbarten Rillenabschnitten 27 ein teilzylindrischer Flächenabschnitt 28 gebildet, der von den zueinander benachbarten Axialrändern der Rillenabschnitte 27 begrenzt ist. Die konstante Breite b des Flächenabschnitts 28 beläuft sich auf etwa 1 bis 3mm. Die Flächenabschnitte 28 verlaufen wendelbahnförmig, wie die Nebenwendelbahn für die Rillenabschnitte 27, längs des Spiralbohrers 1, wobei die Flächenabschnitte 28 von der Hauptwendelnut 13, 15 unterbrochen sind. Wie in Figur 1 ersichtlich ist, werden aufgrund des symmetrischen Aufbaus des Spiralbohrers im Wesentlichen flächenidentische Flächenabschnitte 28 gebildet, die einerseits von den Rillenabschnitten 27, andererseits von dem umlaufenden Rändern der Hauptwendelnut 13, 15 begrenzt sind und bei Seitenansicht gemäß Figur 1 im Wesentlichen die Form eines Parallelogramms bilden. Mit der erfindungsgemäßen Einbringung von den Rillenabschnitten ist ein weiterer Transport von Luft und damit Wärme sowie von Bohrmehl zwischen den Hauptwendelnuten 13, 15 möglich, wodurch die Bohreffektivität und die Standfestigkeit des Spiralbohrers 1 deutlich erhöht werden.

Wie in Figur 1 ersichtlich ist, mündet jeder Rillenabschnitt 27 in einem Winkel von 30° bis 60° am Übergangsrand zwischen der Wendelstegaußenfläche 21, 23 und der jeweiligen Hauptwendelnut 13, 15 in die Hauptwendelnut 13, 15, was in Figur 2 durch die unsymmetrische Nasenmündung der Rillenabschnitte 27 angedeutet ist. Wie in Figur 2 ersichtlich ist, haben beide Hauptwendelnute 13, 15 einen konvexen Nutboden.

Die Nebenwendelbahn ist aufgrund der geringen Wendelsteigung mehrmals durch die Hauptwendelnut 13, 15 unterbrochen, wobei jeder Rillenabschnitt 27 der Nebenwendelbahn von einem Hauptwendelnutrand in den gegenüberliegenden Rand kontinuierlich knickfrei erstreckend mündet.

Es zeigte sich, dass bei der durch die Rillenabschnitte 27 definierten Nebenwendelbahn mit bezüglich der Hauptwendelnutsteigungsrichtung gleichen Steigungsrichtung der Abtransport von Bohrmehl verstärkt sowie die Reibung zwischen der Wendelstegaußenfläche und dem Werkstück deutlich verringert werden kann. Auch der Wärmeabtransport von dem Bohrwerkzeug wird durch die erfindungsgemäße fächerartige Anordnung der unterbrochenen Rillenabschnitte 27 verbessert, weil die Rillenabschnitte durch Erzeugen von Luftturbulenzen an der Außenseite des Spiralbohrers 1 dessen Kühlung bewirken.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Spiralbohrer
- 3: Befestigungsende
- 5, 7: Aussparungen
- 11: Schneidteil
- 13, 15: Hauptwendelnute
- 17: Spanende
- 21, 23: Wendelstegaußenflächen
- 27: Rillenabschnitte
- 28: teilzylindrischer Flächenabschnitt
- X: Axialrichtung
- b: Breite

## Patentansprüche

1. Bohrwerkzeug, insbesondere Spiralbohrer, insbesondere zum Bohren von Gestein, umfassend ein werkzeugseitiges Befestigungsende (3), ein werkstückseitiges Spanende (17) und ein dazwischen liegendes Schneidteil (11) mit wenigstens einer sich längs des Schneidteils (11) erstreckenden Hauptwendelnut (13, 15), die durch eine im wesentlichen konstante Wendelsteigung definiert ist, und wenigstens einer sich längs des Schneidteils (11) erstreckenden, durch die wenigstens eine Hauptwendelnut (13, 15) begrenzten, teilzylindrischen und/oder teilkegelförmigen Wendelstegaußenfläche (21, 23), in der Wendelstegaußenfläche (21, 23) mehrere Rillenabschnitte (27) eingeformt sind, die sich quer zur Richtung der Hauptwendelnutsteigung erstrecken, und unter Ausbildung eines nicht vernachlässigbaren Wendelstegaußenflächenabschnitts (28) axial versetzt zueinander angeordnet sind, **dadurch gekennzeichnet, dass** die mehreren Rillenabschnitte (27) auf wenigstens einer gemeinsamen Nebenwendelbahn liegen, deren Steigung kleiner als die Hauptwendelnutsteigung ist, und die Nebenwendelbahnsteigungsrichtung zur Hauptwendelnutsteigungsrichtung gleichgerichtet ist.

2. Bohrwerkzeug nach Anspruch 1, **dadurch gekennzeichnet, dass** die mehreren Rillenabschnitte (27) parallel zueinander angeordnet sind.

3. Bohrwerkzeug nach Anspruch 1 oder 2, **dadurch gekennzeichnet, dass** sich die mehreren Rillenabschnitte (27) jeweils von einem dem Spanende (17) zugewandten Rand der Hauptwendelnut (13, 15) zu einem dem Befestigungsende (3) zugewandten Rand der Hauptwendelnut (13, 15) erstrecken.

4. Bohrwerkzeug nach einem der vorstehenden Ansprüche, **dadurch gekennzeichnet, dass** die Steigung der wenigstens einen Nebenwendelbahn derart kleiner als die Hauptwendelnutsteigung ist, dass der wendelförmige Verlauf der Nebenwendelbahn bei einem Umlauf wenigstens einmal, vorzugsweise mehrere Male, insbesondere mehr als fünf oder zehn Mal, durch die Hauptwendelnut (13, 15) unterbrochen ist.

5. Bohrwerkzeug nach einem der vorstehenden Ansprüche, **dadurch gekennzeichnet, dass** die Hauptwendelbahnsteigung um wenigstens das Zweifache, insbesondere Fünffache, vorzugsweise Zehnfache, insbesondere Zwölf- oder Fünfzehnfache, größer als die Nebenwendelbahnsteigung ist.

6. Bohrwerkzeug nach einem der vorstehenden Ansprüche, **dadurch gekennzeichnet, dass** die Nebenwendelbahnsteigung und/oder die wenigstens eine Hauptwendelnutsteigung längs des Schneidteils (11) unverändert bleiben.

7. Bohrwerkzeug nach einem der vorstehenden Ansprüche, **dadurch gekennzeichnet, dass** bei einem Durchmesser des Bohrwerkzeugs von 5mm, 6mm, 6,5mm, 7mm, 8mm, 9mm oder 10mm eine Nebenwendelbahnsteigung in einem Bereich von 0,5mm bis 3mm, vorzugsweise von 1mm bis 2,5mm, vorzugsweise von 1,5 bis 2mm ausgewählt ist, wobei insbesondere die Hauptwendelnutsteigung in einem Bereich von 15mm bis 40mm, vorzugsweise von 20mm bis 30mm, ausgewählt ist.

8. Bohrwerkzeug nach einem der vorstehenden Ansprüche, **dadurch gekennzeichnet, dass** eine Breite der mehreren Rillenabschnitte (27) und/oder eine Radialtiefe der mehreren Rillenabschnitte (27) kleiner als eine Hauptwendelnutbreite bzw. eine Hauptwendelnutradialtiefe ist.

9. Bohrwerkzeug nach einem der vorstehenden Ansprüche, **dadurch gekennzeichnet, dass** eine Radialtiefe der mehreren Rillenabschnitte (27) kleiner als 1mm, vorzugsweise kleiner als 0,5mm, insbesondere gleich etwa 0,1mm, ist.

10. Bohrwerkzeug nach einem der vorstehenden Ansprüche, **dadurch gekennzeichnet, dass** eine Breite der mehreren Rillenabschnitte (27) kleiner als 1mm, insbesondere gleich etwa 0,5mm, 0,6mm oder 0,7mm, ist.

11. Bohrwerkzeug nach einem der vorstehenden Ansprüche, **dadurch gekennzeichnet, dass** die mehreren Rillenabschnitte (27) unterbrochen durch die wenigstens eine Hauptwendelnut (13, 15) auf einer Nebenwendelbahn (27) liegen, wobei sich die durch die mehreren Rillenabschnitte definierte Nebenwendelbahn (27) insbesondere konstanter Steigung im Wesentlichen über die gesamte axiale Länge des Schneidteils (11) windet.

12. Bohrwerkzeug nach einem der vorstehenden Ansprüche, **dadurch gekennzeichnet, dass** die die mehreren Rillenabschnitte (27) bildende Nebenwendelbahn im Wesentlichen in das Bohrende mündet.

13. Bohrwerkzeug nach einem der vorstehenden Ansprüche, **dadurch gekennzeichnet, dass** jeder Rillenabschnitt (27) von einem Hauptwendelnutrand in den gegenüberliegenden Hauptwendelnutrand mündet.

## Claims

1. A boring tool, in particular a twist drill, for the drilling of stone, comprising an attachment end (3) on the tool side, a blade end (17) on the workpiece side and a cutting part (11) lying therebetween, with at least one main helical groove (13, 15) extending along the cutting part (11), which main helical groove is defined by a substantially constant helical pitch, and with at least one partially cylindrical and/or partially tapered helix crosspiece outer surface (21, 23) extending along the cutting part (11), delimited by the at least one main helical groove (13, 15), several flute sections (27) are formed in the helix crosspiece outer surface (21, 23), which extend transversely to the direction of the main helical groove pitch, and are arranged axially offset with respect to one another with the formation of a not insignificant helix crosspiece outer surface section (28), **characterized in that** the several flute sections (27) lie on at least one shared subsidiary helical path, the pitch of which is smaller than the main helical groove pitch, and the direction of the subsidiary helical path pitch is in alignment with the direction of the main helical groove pitch.

2. The boring tool according to Claim 1, **characterized in that** the several flute sections (27) are arranged parallel to one another.

3. The boring tool according to Claim 1 or 2, **characterized in that** the several flute sections (27) extend respectively from an edge of the main helical groove (13, 15) facing the blade end (17) to an edge of the main helical groove (13, 15) facing the attachment end (3).

4. The boring tool according to one of the preceding claims, **characterized in that** the pitch of the at least one subsidiary helical path is smaller than the pitch of the main helical groove such that the helical course of the subsidiary helical path on a circulation is interrupted at least once, preferably several times, in particular more than five or ten times, by the main helical groove (13, 15).

5. The boring tool according to one of the preceding claims, **characterized in that** the pitch of the main helical path is at least twice, in particular five times, preferably ten times, in particular twelve or fifteen times greater than the pitch of the subsidiary helical path.

6. The boring tool according to one of the preceding claims, **characterized in that** the pitch of the subsidiary helical path and or the at least one main helical groove pitch remain unchanged along the cutting part (11).

7. The boring tool according to one of the preceding claims, **characterized in that** with a diameter of the boring tool of 5 mm, 6 mm, 6.5 mm, 7 mm, 8 mm, 9 mm or 10 mm a subsidiary helical path pitch is selected in a range of 0.5 mm to 3 mm, preferably of 1 mm to 2.5 mm, preferably of 1.5 to 2 mm, wherein in particular the main helical groove pitch is selected in a range of 15 mm to 40 mm, preferably of 20 mm to 30 mm.

8. The boring tool according to one of the preceding claims, **characterized in that** a width of the several flute sections (27) and/or a radial depth of the several flute sections (27) is smaller than a main helical groove width or respectively a main helical groove depth.

9. The boring tool according to one of the preceding claims, **characterized in that** a radial depth of the several flute sections (17) is less than 1 mm, preferably less than 0.5 mm, in particular equal to approximately 0.1 mm.

10. The boring tool according to one of the preceding claims, **characterized in that** a width of the several flute sections (27) is less than 1 mm, in particular equal to approximately 0.5 mm, 0.6 mm or 0.7 mm.

11. The boring tool according to one of the preceding claims, **characterized in that** the several flute sections (27) interrupted by the at least one main helical groove (13, 15) lie on a subsidiary helical path (27), wherein the subsidiary helical path (27) in particular of constant pitch, defined by the several flute sections, winds substantially over the entire axial length of the cutting part (11).

12. The boring tool according to one of the preceding claims, **characterized in that** the subsidiary helical path forming the several flute sections (27) opens out substantially into the bore end.

13. The boring tool according to one of the preceding claims, **characterized in that** each flute section (27) opens out from one main helical groove edge into the opposite main helical groove edge.

## Revendications

1. Outil de forage, notamment foret hélicoïdal, notamment pour fixer des roches, comprenant une extrémité de fixation (3) du côté de l'outil, une extrémité d'enlèvement de matière (17) du côté de la pièce à usiner et une pièce de coupe (11) disposée entre celles-ci comportant au moins une rainure hélicoïdale principale (13, 15) s'étendant le long de la pièce de coupe (11), qui est définie par une élévation hélicoïdale essentiellement constante, et au moins une surface extérieure de tige hélicoïdale (21, 23) s'étendant au moins le long de la pièce de coupe (11), délimitée par au moins une rainure hélicoïdale principale (13, 15), semi-cylindrique et/ou semi-sphérique, surface extérieure de tige hélicoïdale (21, 23) dans laquelle plusieurs portions de stries (27) sont façonnées, qui s'étendent transversalement à la direction de l'élévation de rainure hélicoïdale principale, et sont décalées axialement les unes des autres en réalisant une portion de surface extérieure de tige hélicoïdale (28) non négligeable, **caractérisé en ce que** les plusieurs portions de stries (27) se situent sur au moins un tronçon hélicoïdal annexe commun, dont l'élévation est plus petite que l'élévation de rainure hélicoïdale principale, et la direction d'élévation du tronçon hélicoïdal annexe a la même orientation que la direction d'élévation de rainure hélicoïdale principale.

2. Outil de forage selon la revendication 1, **caractérisé en ce que** les plusieurs portions de stries (27) sont disposées parallèlement les unes aux autres.

3. Outil de forage selon les revendications 1 ou 2, **caractérisé en ce que** les plusieurs portions de stries (27) s'étendent respectivement d'un bord tourné vers l'extrémité d'enlèvement de matière (17) de la rainure hélicoïdale principale (13, 15) jusqu'à un bord tourné vers l'extrémité de fixation (3) de la rainure hélicoïdale principale (13, 15).

4. Outil de forage selon une des revendications précédentes, **caractérisé en ce que** l'élévation d'au moins un tronçon hélicoïdale annexe est plus petite que l'élévation de rainure hélicoïdale principale de telle sorte que le cours hélicoïdal du tronçon hélicoïdal annexe soit interrompu lors d'une révolution d'au moins une fois, de préférence plusieurs fois, notamment plus de cinq ou dix fois, par la rainure hélicoïdale principale (13, 15).

5. Outil de forage selon une des revendications précédentes, **caractérisé en ce que** l'élévation du tronçon hélicoïdal principal est plus grand d'au moins le double, notamment le quintuple, de préférence le décuple, notamment douze fois ou quinze fois plus grande que l'élévation de tronçon hélicoïdal annexe.

6. Outil de forage selon une des revendications précédentes, **caractérisé en ce que** l'élévation du tronçon hélicoïdal annexe et/ou au moins une élévation de rainure hélicoïdale principale restent inchangées le long de la pièce de coupe (11).

7. Outil de forage selon une des revendications précédentes, **caractérisé en ce que** en présence d'un diamètre de l'outil de forage de 5 mm, 6 mm, 6,5 mm, 7 mm, 8 mm, 9 mm ou 10 mm une élévation de tronçon hélicoïdal annexe est sélectionnée dans une plage de 0,5 mm à 3 mm, de préférence de 1 mm à 2,5 mm, de préférence de 1,5 à 2 mm, dans lequel notamment l'élévation de la rainure hélicoïdale principale est sélectionnée dans une plage de 15 mm à 40 mm, de préférence de 20 mm à 30 mm.

8. Outil de forage selon une des revendications précédentes, **caractérisé en ce que** une largeur de plusieurs portions de stries (27) et/ou une profondeur radiale de plusieurs portions de stries (27) est plus petite qu'une largeur de rainure hélicoïdale principale ou une profondeur de rainure hélicoïdale principale.

9. Outil de forage selon une des revendications précédentes, **caractérisé en ce que** une profondeur radiale de plusieurs portions de stries (27) est plus petite que 1 mm, de préférence plus petite que 0,5 mm, de préférence égale à environ 0,1 mm.

10. Outil de forage selon une des revendications précédentes, **caractérisé en ce que** une largeur de plusieurs portions de stries (27) est plus petite que 1 mm, notamment égale à environ 0,5 mm, 0,6 mm ou 0,7 mm.

11. Outil de forage selon une des revendications précédentes, **caractérisé en ce que** plusieurs portions de stries (27) sont situées de manière interrompue par au moins une rainure hélicoïdale principale (13, 15) sur un tronçon hélicoïdal annexe (27), dans lequel le tronçon hélicoïdal annexe (27) défini par les plusieurs portions de stries s'enroule notamment à une élévation constante essentiellement sur la longueur axiale totale de la pièce de coupe (11).

12. Outil de forage selon une des revendications précédentes, **caractérisé en ce que** le tronçon hélicoïdal annexe formant plusieurs portions de stries (27) débouche essentiellement dans l'extrémité de forage.

13. Outil de forage selon une des revendications précédentes, **caractérisé en ce que** chaque portion de strie (27) débouche à partir d'un bord de rainure hélicoïdale principale dans le bord de rainure hélicoïdale principale opposé.
